# EUROPEAN PATENT SPECIFICATION

(11) **EP 2 086 093 B1**
(45) Date of publication and mention of the grant of the patent: **26.02.2014**
(21) Application number: 08020973.7
(22) Date of filing: 03.12.2008
(51) Int. Cl.: H02K 11/00, H02K 9/06

(54) **Rotating electrical machine**
Rotierende elektrische Maschine
Machine électrique rotative

(30) Priority: 06.12.2007 JP 2007316398
(43) Date of publication of application: 05.08.2009
(73) Proprietor: Hitachi, Ltd., Tokyo 100-8280 (JP)
(72) Inventor: Yoshida, Kenichi, Tokyo 100-8220 (JP); Suwa, Tokihito, Tokyo 100-8220 (JP); Oyama, Kazuto, Tokyo 100-8220 (JP); Shimizu, Hisaya, Tokyo 100-8220 (JP); Umesaki, Yosuke, Tokyo 100-8220 (JP)
(74) Representative: Beetz & Partner

(56) References cited:
- EP-A- 1 768 236
- DE-A1-102004 007 395
- JP-A- 11 234 954
- JP-A- 2003 259 600
- US-A1- 2007 023 421

## Description

### BACKGROUND OF THE INVENTION

### 1. Field of the Invention

The present invention relates in general to rotating electrical machines and more particularly to a rotating electrical machine suitably used as a machine serving as both a generator and an engine starter operating as the generator while a vehicle is running (an engine is running) and a starter while the engine is stationary. A rotating electrical machine according to the preamble portion of patent claim 1 is known from DE 10 2004 007 395 A1.

### 2. Description of the Related Art

In recent years, efforts are being made toward reduction in CO₂ emissions from vehicles for prevention of global warming. As part of measures for achieving the goal of the reduced CO₂ emissions, bringing the engine to a stop when the vehicle is stationary (idling stop) is being studied. Various arrangements have been devised as idling stop mechanisms. Among them, a technique that starts the engine using a conventional vehicle generator has been proposed. An inverter unit is required for driving the vehicle generator as a motor. A known arrangement integrates the inverter unit with the vehicle generator to provide a compact and lightweight machine that serves as both the vehicle generator and the engine starter (see, for example, Japanese Patent No. 3598586).

The inverter unit is more susceptible to heat than other components. If a compact machine is built by integrating the inverter unit with the vehicle generator, the inverter unit temperature runs high, so that an operating temperature limit thereof could be exceeded. Arrangements are therefore known, in which an air from a fan attached to a rotating electrical machine is blown properly against a switching semiconductor device (see, for example, JP 2004-274992 A and JP 2006-504386 A).

Another known arrangement includes an inverter unit mounted with a gap relative to the vehicle generator (see, for example, JP 2006-33986 A).

### SUMMARY OF THE INVENTION

The arrangements disclosed in JP 2004-274992 A and JP 2006-504386 A, however, use the air generation through rotation of the fan for cooling the inverter unit. Consequently, when the vehicle remains stationary and the vehicle generator stops rotating, the fan also remains stationary, which poses a problem of increased temperature of the inverter unit.

In the arrangement disclosed in JP 2006-33986 A, the gap, specifically, an air layer interposed between the vehicle generator and the inverter unit helps reduce the effect of thermal radiation from the vehicle generator while the vehicle generator is not rotating more than in the arrangements of JP 2004-274992 A and JP 2006-504386 A. A problem remains unsolved, however, in that the effect of heat transfer from a mounting spacer cannot be ignored. Furthermore, a radiation fin is disposed on the side of the vehicle generator, which makes the radiation fin susceptible to the thermal radiation from the vehicle generator.

DE 10 2004 007 395 A1 discloses a rotating electrical machine comprising a rotating electrical machine main body, the rotating electrical machine main body having:
a rotor including a fan for making a cooling air circulate; a stator disposed so as to oppose the rotor via an air gap; and a housing for fixing the stator by accommodating the stator, and an inverter unit, the inverter unit having:
   a case; and a plurality of switching semiconductor devices accommodated in the case, the inverter unit controlling the operation of the rotating electrical machine main body and output power of the rotating electrical machine main body, wherein:
      the rotating electrical machine main body and the inverter unit are coupled with each other by the case being connected with the housing; the rotating electrical machine main body and the inverter unit are in communication with each other such that the cooling air circulated by rotation of the fan cools the inverter unit and then flows into the housing.

US 2007/0023421 A1 shows an inverter-integrated electrical rotating machine having a heat sink case housing and a cooling air flow passes along cooling air passages to cool down said heat sink.

It is an object of the present invention to provide a rotating electrical machine capable of reducing the temperature of an inverter unit even without air for cooling from a fan.
(1) To achieve the foregoing object, provided according to one aspect of the present invention is a rotating electrical machine comprising the features of claim 1.

The foregoing configuration allows the temperature of the inverter unit to be reduced even without the cooling air from the fan.
(2) In the above-referenced (1), preferably, the rotating electrical machine further includes a radiation means disposed opposite the suppression means with respect to the switching semiconductor devices, the radiation means radiating heat of the switching semiconductor devices.
(3) In the above-referenced (1), preferably, the suppression means forms part of the case formed of a resin and the switching semiconductor devices are molded in the resin case.
(4) In the above-referenced (1), preferably, the switching semiconductor devices are disposed on a substrate fixed to the case and the suppression means includes a gel or a resin packed in a recess formed between the case and the substrate on the side on which the switching semiconductor devices are disposed.
(5) In the above-referenced (1), preferably, the rotating electrical machine further includes a reflection means disposed on the front side of the suppression means and on the side of the rotating electrical machine main body, the reflection means reflecting the thermal radiation from the rotating electrical machine main body.
(6) In the above-referenced (1), preferably, the switching semiconductor devices are disposed at hidden positions when the inverter unit is viewed from the position of the rotating electrical machine main body.
(7) In the above-referenced (1), preferably, the rotating electrical machine further includes a resin material covering the fan on the side of the rotating electrical machine main body.
(8) In the above-referenced (1), preferably, the switching semiconductor devices inside the inverter unit generate heat more in a driving mode than in a power generation mode.
(9) In the above-referenced (1), preferably, the case includes a hole through which the cooling air from the fan of the rotating electrical machine main body passes and the case includes an edge formed in a protruding condition on the periphery of the hole on the side of the hole opposite the rotating electrical machine main body.
(10) In the above-referenced (1), preferably, the switching semiconductor devices of the inverter unit are MOS-FET transistors performing synchronous rectification during the power generation mode of the rotating electrical machine main body.
(11) To achieve the foregoing object, provided according to another aspect of the present invention is a rotating electrical machine wherein
   a path along which the thermal radiation radiated or irradiated from the rotating electrical machine main body reaches the switching semiconductor devices includes a suppression means provided thereon, the suppression means preventing the thermal radiation from reaching the switching semiconductor devices.

The foregoing arrangements allow the temperature of the inverter unit to be reduced even without the cooling air from the fan.

In accordance with the aspects of the present invention, the temperature of the inverter unit can be reduced even without the cooling air from the fan.

### BRIEF DESCRIPTION OF THE DRAWINGS

The present invention will be described hereinafter with reference to the accompanying drawings.
Fig. 1 is a cross-sectional view showing a general arrangement of a rotating electrical machine according to an embodiment of the present invention.
Fig. 2 is an enlarged cross-sectional view showing an arrangement near an inverter unit used in the rotating electrical machine according to the embodiment of the present invention.
Fig. 3 is a cross-sectional view showing the general arrangement of the rotating electrical machine according to the embodiment of the present invention.
Fig. 4 is a plan view showing a resin case used in the rotating electrical machine according to the embodiment of the present invention.
Fig. 5 is a cross-sectional view showing a principal part of the resin case used in the rotating electrical machine according to the embodiment of the present invention.
Fig. 6 is a drawing illustrating thermal radiation in the rotating electrical machine according to the embodiment of the present invention.
Fig. 7 is a drawing illustrating the thermal radiation in the rotating electrical machine according to the embodiment of the present invention.
Fig. 8 is a drawing illustrating the thermal radiation in the rotating electrical machine according to the embodiment of the present invention.
Fig. 9 is a drawing illustrating the thermal radiation in the rotating electrical machine according to the embodiment of the present invention.
Fig. 10 is a graph illustrating a temperature increase in the rotating electrical machine according to the embodiment of the present invention.
Fig. 11 is an enlarged cross-sectional view showing an arrangement near an inverter unit used in a rotating electrical machine according to another embodiment of the present invention.

### DESCRIPTION OF THE PREFERRED EMBODIMENTS

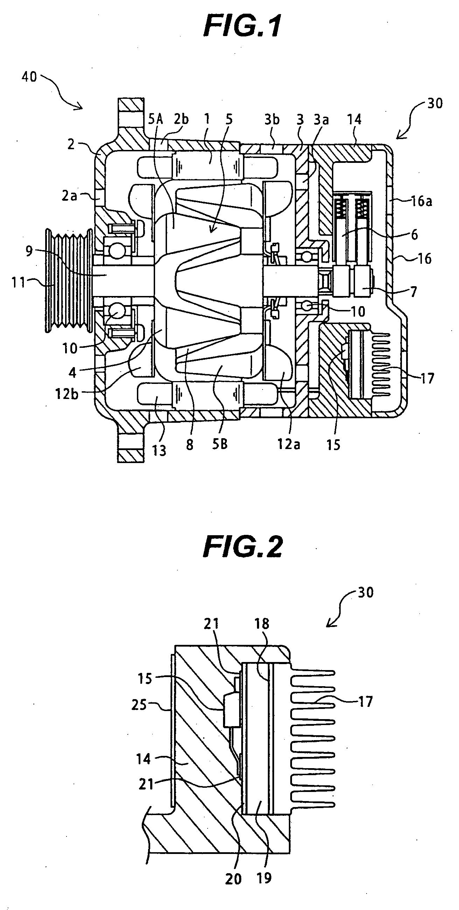

The configuration of a rotating electrical machine according to an embodiment of the present invention will be described below with reference to Figs. 1 to 10.

The overall configuration of the rotating electrical machine according to the embodiment of the present invention will be first described with reference to Fig. 1.

Fig. 1 is a cross-sectional view showing the overall configuration of the rotating electrical machine according to the embodiment of the present invention.

The rotating electrical machine according to the embodiment of the present invention includes a rotating electrical machine main body 40 and an inverter unit 30. The rotating electrical machine main body 40 used in the rotating electrical machine according to the embodiment of the present invention is a three-phase synchronous rotating electrical machine having a claw pole-type rotor. The rotating electrical machine main body 40 serves as both a generator and an engine starter. The inverter unit 30 converting the DC power of, for example, a battery to three-phase AC power is integrally formed on a side face of the rotating electrical machine main body 40.

In the rotating electrical machine main body 40, a rotor 4 is rotated by the rotative power of an engine when the engine is operating, so that a stator 1 generates electric power; for starting the engine, the rotor 4 is rotated through a magnetic action with the stator 1, which gives the engine the rotative power. The inverter unit 30 controls the operation and output power of the rotating electrical machine main body 40. The rotating electrical machine main body 40 and the inverter unit 30 are coupled with each other by a case 14 of the inverter unit 30 being connected to a housing 3 of the rotating electrical machine main body 40.

The configuration of the rotating electrical machine according to the embodiment of the present invention is described below in detail.

The stator 1 of the rotating electrical machine main body 40 includes stator coils 13 for three phases wave-wound around a slot in a stator core. The stator 1 of the rotating electrical machine main body 40 is sandwiched between a front housing 2 and a rear housing 3. The stator 1 has its outer periphery covered in the front housing 2. To improve heat conduction between the outer periphery of the stator 1 and the front housing 2, a resin or a similar material having a high coefficient of thermal conductivity may be inserted.

The front housing 2 includes a plurality of holes 2a, 2b formed therein for introducing a cooling air from the outside. The hole 2a is disposed on an end face of the front housing 2 and used for introducing the cooling air into the rotating electrical machine main body 40. The hole 2b is disposed on an outer peripheral surface of the front housing 2 and used for drawing air out of the rotating electrical machine main body 40. In addition, the rear housing 3 includes a plurality of holes 3a, 3b formed therein for introducing the cooling air from the outside. The hole 3a is disposed on an end face of the rear housing 3 and used for introducing the cooling air drawn through holes 16a in a cover 16 into the inside of the rotating electrical machine main body 40. The hole 3b is disposed on an outer peripheral surface of the rear housing 3 and used for drawing air out of the inside of the rotating electrical machine main body 40.

The rotor 4 is disposed on an inner peripheral side of the stator 1 so as to oppose the stator 1 via an air gap. The rotor 4 includes a Lundell-type rotor core 5 composed of a first claw pole 5A and a second claw pole 5B. The rotor core 5 is fixed to a shaft 9. A magnetic field coil 8 is wound on an inner periphery of the rotor core 5. A field current is supplied to the magnetic field coil 8 via a brush 6 and a slip ring 7. The field current supplied to the magnetic field coil 8 generates field magnetic flux required for generating electricity and driving. A magnet may be inserted between the first claw pole 5A and the second claw pole 5B to improve an output of the field magnetic flux.

The rotor core 5 is rotatably supported by bearings 10 mounted in the front housing 2 and the rear housing 3. A pulley 11 is fixed to one end of the shaft 9. The pulley 11 is run by a belt put around an engine crankshaft pulley, which allows the rotating electrical machine to operate as the generator. When the rotating electrical machine operates as the starter, the driving force generated in the shaft 9 is transmitted to the engine via the pulley 11 and used for starting the engine.

Fans 12a, 12b are mounted on both end faces of the rotor core 5 of the rotor 4.

The case 14 made of resin (hereinafter referred to as "resin case 14") is mounted on an end face of the rotating electrical machine main body 40 opposite the pulley 11. The resin case 14 holds the inverter unit 30 in place. A plurality of switching semiconductor devices 15 are mounted on the resin case 14. MOS-FET is used as the switching semiconductor devices 15. At least six switching semiconductor devices 15 are used to convert DC power to AC power. A first switching semiconductor device 15 and a second switching semiconductor device 15 are connected in series with each other to form a U-phase vertical arm. A third switching semiconductor device 15 and a fourth switching semiconductor device 15 are connected in series with each other to form a V-phase vertical arm. A fifth switching semiconductor device 15 and a sixth switching semiconductor device 15 are connected in series with each other to form a W-phase vertical arm. The U-phase vertical arm, the V-phase vertical arm, and the W-phase vertical arm are connected in parallel with each other.

When the rotating electrical machine operates as the starter, the DC power from an external DC power source, such as the battery, is converted to three-phase AC power by the inverter unit 30 and supplied to each coil of the stator coils 13 for three phases as a stator current. When the rotating electrical machine operates as the generator, the stator current generated in the stator coil 13 is synchronously rectified by the inverter unit 30 and the generated DC power is stored in the external battery or the like.

The inverter unit 30 mounted on the resin case 14 is mounted with a semiconductor switching device for field current control (not shown). The brush 6 is housed in a brush holder. The brush holder is attached to the resin case 14. The field current that has undergone duty control by the field current control semiconductor switching device is supplied to the magnetic field coil 8 via the brush 6 and the slip ring 7.

Further, the inverter unit 30 has a heatsink 17 as a means of dissipating heat generated from the switching semiconductor devices 15. Being disposed on a side opposite the rotating electrical machine main body 40 relative to the switching semiconductor devices 15, the heatsink 17 is less susceptible to the thermal radiation from the rotating electrical machine main body 40, thus effectively dissipating heat.

The inverter unit 30 is the resin case 14 having a control device and the switching semiconductor devices 15 molded thereinside. Detailed arrangements near the inverter unit 30 will be described later with reference to Fig. 2.

The cover 16 formed of a resin for protecting the brush 6 and the heatsink 17 is attached to the rear side of the resin case 14 of the inverter unit 30.

The resin case 14 includes holes 14a formed therein. The holes 14a function to allow the cooling air to flow, as will be described later with reference to Fig. 14. In addition, the cover 16 includes the holes 16a formed therein for introducing the cooling air from the outside.

The arrangement near the inverter unit 30 used in the rotating electrical machine according to the embodiment of the present invention will be described below with reference to Fig. 2.

Fig. 2 is an enlarged cross-sectional view showing the arrangement near the inverter unit 30 used in the rotating electrical machine according to the embodiment of the present invention. Note that like reference numerals from Fig. 1 denote like parts.

The mounting structure for the inverter unit 30 will be described in details with reference to Fig. 2. The heatsink 17 formed of an aluminum is fixed to an aluminum plate 19 as a substrate with an adhesive 18. An insulating resin 20 and a copper-plate wiring pattern 21 are formed, in sequence, on the aluminum plate 19. The switching semiconductor device 15 is mounted on the copper-plate wiring pattern 21. The switching semiconductor device 15 is molded in the resin case 14 of the inverter unit 30. The switching semiconductor device 15 is therefore structured not to be affected by dust deposits. Wire bonding is employed for connecting the switching semiconductor device 15 with the wiring pattern 21. A bonding wire used is held in place and secured by the resin of the resin case 14, so that the connection is free from any mechanical effect, such as vibration.

A metal foil 25 as a means of reflecting the thermal radiation (infrared rays) from the rotating electrical machine main body 40 is attached on the side of the resin case 14 adjacent to the rotating electrical machine main body 40. Note that painting or plating that reflects the thermal radiation from the rotating electrical machine main body 40 may be used in place of the metal foil 25. For painting, a paint containing a pigment having a high reflectivity is used. The pigment having the high reflectivity reflects infrared radiation as the thermal radiation. For plating, electroless plating of a metal material is used.

Types of heat other than the thermal radiation are transmitted to the inverter unit 30 through, for example, air convection. The switching semiconductor device 15 is covered with the resin having a low thermal conductivity, and an increase in temperature of the switching semiconductor device 15 can be reduced.

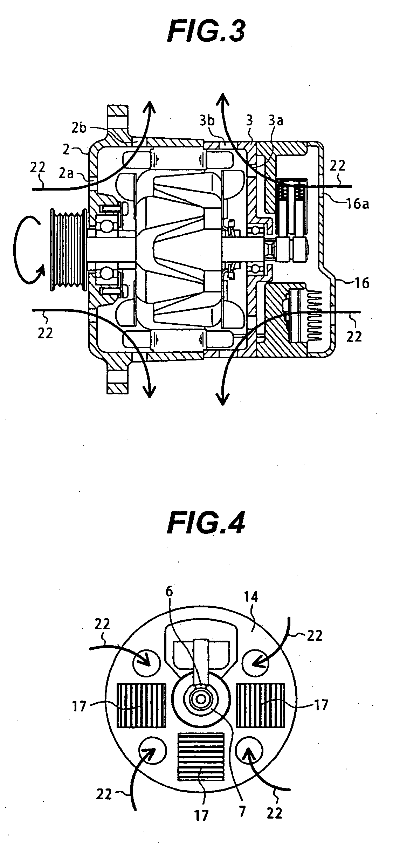

Flow of cooling air in the rotating electrical machine according to the embodiment of the present invention will be described below with reference to Figs. 3 through 5.

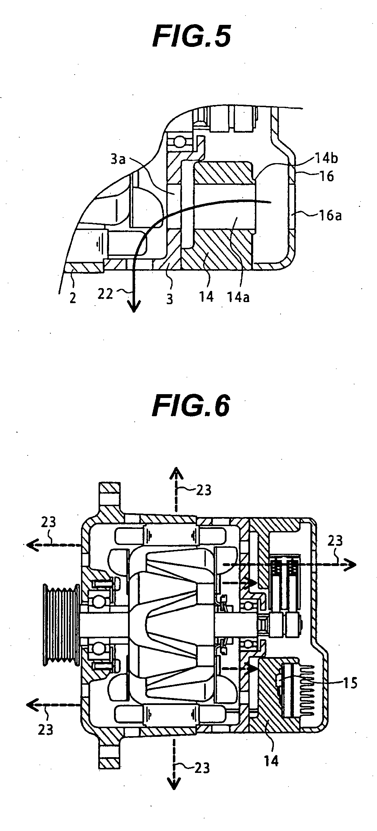

Fig. 3 is a cross-sectional view showing the general arrangement of the rotating electrical machine according to the embodiment of the present invention. Fig. 4 is a plan view showing the resin case 14 used in the rotating electrical machine according to the embodiment of the present invention. Fig. 5 is a cross-sectional view showing a principal part of the resin case 14 used in the rotating electrical machine according to the embodiment of the present invention. Note that, in Figs. 3 to 5, like reference numerals from Fig. 1 denote like parts.

As described earlier with reference to Fig. 1, the fans 12a, 12b are mounted on both end faces of the rotor core 5 of the rotor 4. When the rotating electrical machine operates as the generator, a cooling air 22 flows into the inside of the rotating electrical machine main body 40 through the holes 2a in the front housing 2 and out of the rotating electrical machine main body 40 through the holes 2b as shown in Fig. 3. During this process, the stator coils 13 are cooled. The cooling air 22 also flows into the inside of the rotating electrical machine main body 40 via the holes 16a in the cover 16 and the holes 3a in the rear housing 3 and out of the rotating electrical machine main body 40 through the holes 3b. During this process, the stator coils 13 are cooled.

Referring to Fig. 4, the resin case 14 includes the plurality of holes 14a formed therein. Referring to Fig. 5, the cooling air 22 that has flowed through the hole 16a in the cover 16 therefore flows past the hole 14a into the inside of the rotating electrical machine main body 40 via the hole 3a in the rear housing 3.

As shown in Fig. 4, there are a total of three aluminum heatsinks 17. The switching semiconductor device 15 constituting the vertical arm of each phase of U, V, and W is disposed in the rear of each heatsink 17.

The thermal radiation in the rotating electrical machine according to the embodiment of the present invention will be described below with reference to Figs. 6 through 9.

Figs. 6 through 9 are drawings illustrating the thermal radiation in the rotating electrical machine according to the embodiment of the present invention.

When the rotating electrical machine is used as the starter, a large current of, for example, 300 A is passed through the stator coil 13. When the rotating electrical machine is used as the generator, a large current of, for example, 100 A is passed through the stator coil 13. Consequently, an amount of heat generated by the switching semiconductor device 15 is greater during driving than during generating. The current flowing through the magnetic field coil 8 is, on the other hand, small ranging, for example, from 5 to 10 A. The stator coil 13 therefore generates the greatest amount of heat.

The heat of the stator coil 13 is conducted to the stator core. When the temperature of the stator 1 increases, that of the rotor 4 also increases. It should be noted that the stator 1 is structured to be in contact with the outside via the housing, so that heat of the stator 1 can be relatively easily dissipated. The rotor 4 is, on the other hand, accommodated inside the stator 1 and heat of the rotor 4 is therefore hard to dissipate. As a result, the rotor 4 serves as a major source of the thermal radiation.

Referring to Fig. 6, thermal radiation 23 emitted from the rotating electrical machine main body 40, or the rotor 4 in particular, is in the first place radiated from an outer peripheral surface of the outer peripheral housing. The thermal radiation 23 is in the second place radiated to the outside from the end face of the front housing 2. The resin case 14 and the resin cover 16 for mounting the inverter unit 30 are fitted, on the other hand, on the end face of the rear housing 3.

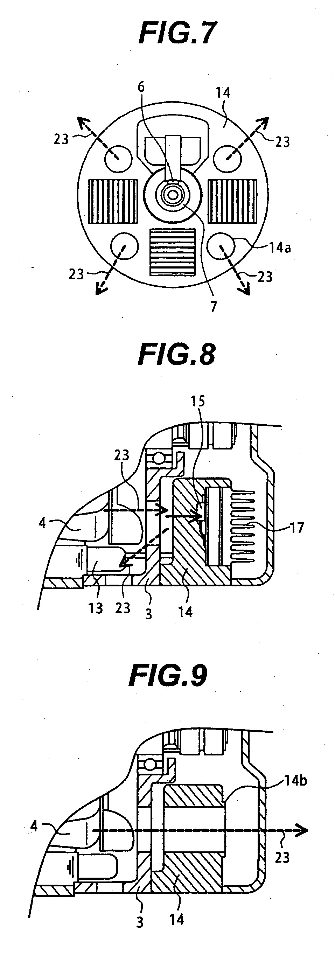

The thermal radiation 23 therefore in the third place moves through the holes 14a for introducing the cooling air in the inverter unit 30 from the end face of the rear housing 3 as shown in Figs. 7 and 9. Note herein that a protrusion-like edge 14b protruding in the axial direction of the hole 14a is formed along an outer periphery of the hole 14a on the side of the hole 14a opposite the rotating electrical machine main body 40. The edge 14b helps prevent the thermal radiation from the hole 14a from sneaking onto a radiation part of the inverter unit 30.

Referring now to Fig. 8, the switching semiconductor device 15 is disposed at a hidden place when looking the inverter unit 30 from the side of the rotating electrical machine main body 40. Specifically, the switching semiconductor device 15 is structured to be covered in the resin case 14 so as not to radiate directly. The resin case 14 covers the switching semiconductor device 15 and thus conducts the thermal radiation 23 thereto. The resin case 14 nonetheless has a thermal conductivity lower than those of, for example, metals. For instance, an epoxy resin has a thermal conductivity of 0.3 W/m.K and a silicon resin has a thermal conductivity of 0.16 W/m.K. These thermal conductivity values of the resins are much smaller as compared with those of metals, for example, aluminum (236 W/m.K). Furthermore, as described earlier with reference to Fig. 2, the metal foil 25 reflecting the thermal radiation 23 from the rotating electrical machine main body 40 is attached on the side of the resin case 14 which is adjacent to the rotating electrical machine main body 40. The metal foil 25 thus reflects the thermal radiation 23 to reduce the amount of heat conducted further.

Referring to Fig. 7, the resin case 14 has the holes 14a formed therein, disposed at positions different from those at which the heatsinks 17 are disposed. Consequently, the thermal radiation 23 that has passed through the holes 14a does not fall directly on the heatsinks 17.

Note that the amount of heat conducted from the rotating electrical machine can be reduced by using a resin or other material having a low thermal conductivity for the fans 12a, 12b.

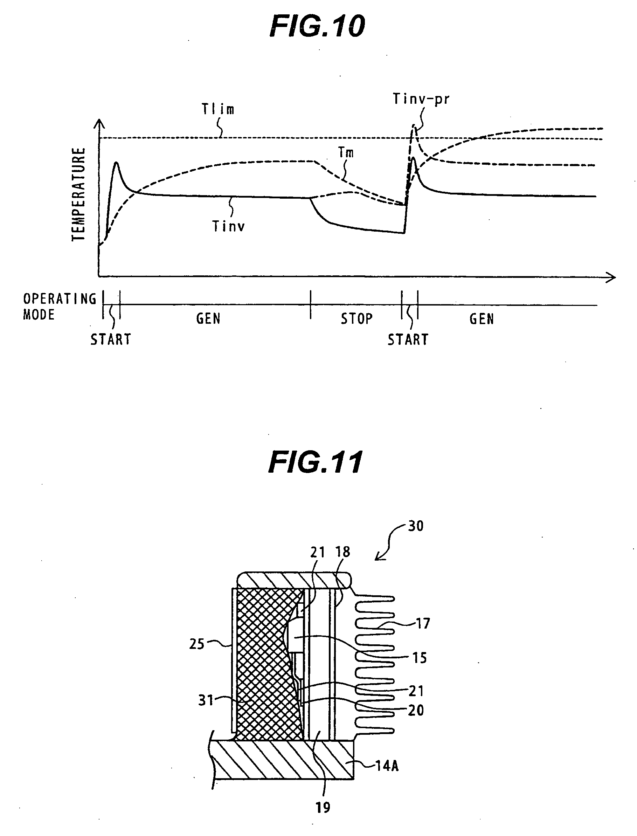

Temperature increase in the rotating electrical machine according to the embodiment of the present invention will be described below with reference to Fig. 10.

Fig. 10 is a graph illustrating the temperature increase in the rotating electrical machine according to the embodiment of the present invention.

In Fig. 10, the abscissa represents time. Operating modes include a start mode (START), a power generation mode (GEN), and a stop mode (STOP). The idling stop is carried out as follows. Specifically, when the vehicle is brought to a stop at an intersection, the engine is stopped and the rotating electrical machine stops rotating. When the vehicle is started, the start mode (START) is set and the rotating electrical machine is used as the starter to start the engine. As the vehicle starts running, the power generation mode (GEN) is set and the rotating electrical machine is used as the generator to start generating electricity. When the vehicle is brought to a stop at, for example, the intersection, the engine is stopped and the rotating electrical machine stops rotating. The sequence of the foregoing operations is repeated.

In Fig. 10, the ordinate represents temperature. A broken line Tm indicates temperature of the rotating electrical machine main body 40. A solid line Tinv indicates temperature of the inverter unit 30 in the rotating electrical machine having the arrangements according to the embodiment of the present invention. A dash-single-dot line Tinv-pr indicates temperature of the inverter unit 30 in the rotating electrical machine having the prior-art arrangements.

When a stationary engine is started in the start mode (START), a driving current more than a generated current flows through the switching semiconductor device 15 and, as a result, the temperature Tinv of the inverter unit 30 increases rapidly. The start mode (START), however, lasts for only about several seconds and the power generation mode (GEN) is set soon after the engine has been started, so that the temperature Tinv of the inverter unit 30 decreases rapidly.

A large current flows though the stator coil 13 and the temperature of the rotating electrical machine main body 40 increases gradually.

When in the power generation mode (GEN), the temperature Tinv of the inverter unit 30 becomes substantially constant. This is because of the following reason. Specifically, in accordance with the embodiment of the present invention, a synchronous rectification system using the MOS-FET as the switching semiconductor device 15 is employed for rectifying the generated current. The synchronous rectification system generates a reduced amount of heat than a commonly found diode rectification system does. In addition, during the power generation mode (GEN), the temperature of the rotating electrical machine remains constant, since the rotating electrical machine is cooled by the cooling air blown by the fan 12a attached to the rotor core 5 of the rotating electrical machine.

In the stop mode (STOP) (during idling stop), the engine also remains stationary, so that no cooling air is available from the rotating electrical machine.

In the rotating electrical machine according to the prior art arrangement, therefore, the temperature Tinv-pr of the inverter unit 30 increases regardless of the timing at which the vehicle is stationary, since the inverter unit 30 is heated by the thermal radiation from the rotating electrical machine that has been generating heat during the power generation mode (GEN). If the vehicle is set into the start mode (START) for restarting the engine in the above-referenced condition, the temperature Tinv-pr of the inverter unit 30 exceeds an allowable temperature limit Tlmt of the switching semiconductor device 15 and there is a danger of breakdown.

The rotating electrical machine according to the embodiment of the present invention, on the other hand, is structured such that the switching semiconductor device 15 and the heatsinks 17 are not subject to the effect of the thermal radiation. The temperature Tinv of the inverter unit 30 therefore remains low. Given this condition, the temperature of the switching semiconductor device 15 can be kept to a level equivalent to, or lower than, the allowable temperature limit Tlmt even with repeated engine starting operations.

Arrangements of a rotating electrical machine according to another embodiment of the present invention will be described below with reference to Fig. 11. The rotating electrical machine according to the second embodiment of the present invention shares the same general arrangement as that of the rotating electrical machine according to the first embodiment of the present invention shown in Fig. 1.

Fig. 11 is an enlarged cross-sectional view showing an arrangement near an inverter unit used in the rotating electrical machine according to the second embodiment of the present invention. Like reference numerals from Figs. 1 and 2 denote like parts.

An aluminum plate 19 of an inverter unit 30 is molded inside a resin case 14A. The rotating electrical machine according to the second embodiment of the present invention, however, differs from the rotating electrical machine according to the first embodiment of the present invention shown in Fig. 2 in that a side on which a switching semiconductor device 15 is mounted includes a recess formed therein and is not covered in the resin case 14A.

A heatsink 17 made of aluminum is fixed to the aluminum plate 19 with an adhesive 18. An insulating resin 20 and a copper-plate wiring pattern 21 are formed, in sequence, on the aluminum plate 19. The switching semiconductor device 15 is mounted on the copper-plate wiring pattern 21.

The recess in the resin case 14A formed on the side on which the switching semiconductor device 15 is mounted is packed with a gel 31, such as a silicon gel. Specifically, the switching semiconductor device 15 is covered in the gel 31. The switching semiconductor device 15 is therefore structured not to be affected by dust deposits. Wire bonding is employed for connecting the switching semiconductor device 15 with the wiring pattern 21. A bonding wire used is held in place by the gel 31, so that the connection is free from any mechanical effect, such as vibration. A hardened resin, instead of the gel 31, may be used.

A metal foil 25 as a means of reflecting the thermal radiation from a rotating electrical machine main body 40 is attached on a surface of the gel 31 on a side of the resin case 14 adjacent to the rotating electrical machine main body 40. Note that painting or plating that reflects the thermal radiation from the rotating electrical machine main body 40 may be used in place of the metal foil 25. For painting, a paint containing a pigment having a high reflectivity is used. The pigment having the high reflectivity reflects infrared radiation as the thermal radiation. For plating, electroless plating of a metal material is used.

Types of heat other than the thermal radiation are transmitted to the inverter unit 30 through, for example, air convection. The switching semiconductor device 15 is covered in the gel 31 having a low thermal conductivity and an increase in temperature of the switching semiconductor device 15 can be reduced.

The embodiments of the present invention are a method applicable to the rotating electrical machine for idling stop. The embodiments of the present invention are also applicable to means of reducing engine vibration and of assisting in engine torque during acceleration of the vehicle.

As described heretofore, according to the embodiments of the present invention, the increase in temperature of the switching semiconductor device 15 can be reduced even if the inverter unit 30 is heated by the thermal radiation from the rotating electrical machine immediately after the vehicle is stopped, so that a driving current that can start the engine can be supplied to the rotating electrical machine.

## Claims

1. A rotating electrical machine comprising:
a rotating electrical machine main body (40), the rotating electrical machine main body (40) having:
a rotor (4) mechanically connected to an engine and including a fan (12a,12b) for making a cooling air circulate;
a stator (1) disposed so as to oppose the rotor via an air gap; and
a housing (2) for fixing the stator (1) by accommodating the stator (1), the rotating electrical machine main body (40) generating power at the stator (1) by the rotor (4) being rotated by the rotative power of the engine when the engine is in operation and giving the rotative power to the engine by the rotor (4) being rotated due to a magnetic action with the stator (1) upon engine start-up; and
an inverter unit (30), the inverter unit having:
a case (14); and
a plurality of switching semiconductor devices (15) accommodated in the case (14), the inverter unit (30) controlling the operation of the rotating electrical machine main body (40) and output power of the rotating electrical machine main body (40); wherein:
the rotating electrical machine main body (40) and the inverter unit (30) are coupled with each other by the case (14) being connected with the housing (2);
the rotating electrical machine main body (40) and the inverter unit (30) are in communication with each other such that the cooling air circulated by rotation of the fan cools the inverter unit (30) and then flows into the housing (2);
**characterized in that**
the resin case (14) further includes a suppression means having a thermal conductivity lower than those of metals disposed between the rotating electrical machine main body (40) and the switching semiconductor devices (15), the suppression means preventing thermal radiation radiated or irradiated from the rotating electrical machine main body (40) from reaching the switching semiconductor devices (15).

2. The rotating electrical machine according to claim 1, further comprising:
a radiation means (17) disposed opposite the suppression means with respect to the switching semiconductor devices (15), the radiation means radiating heat of the switching semiconductor devices (15).

3. The rotating electrical machine according to claim 1, wherein:
the suppression means forms part of the case (14) formed of a resin and the switching semiconductor devices (15) are molded in the resin case (14).

4. The rotating electrical machine according to claim 1, wherein:
the switching semiconductor devices (15) are disposed on a substrate fixed to the case (14); and
the suppression means includes a gel or a resin packed in a recess formed between the case (14) and the substrate on the side on which the switching semiconductor devices (15) are disposed.

5. The rotating electrical machine according to claim 1, further comprising:
a reflection means (25) disposed on the front side of the suppression means and on the side of the rotating electrical machine main body (40), the reflection means reflecting the thermal radiation from the rotating electrical machine main body (40).

6. The rotating electrical machine according to claim 1, wherein:
when the inverter unit (30) is viewed from the position of the rotating electrical machine main body (40), the switching semiconductor devices (15) are disposed at hidden positions.

7. The rotating electrical machine according to claim 1, further comprising:
a resin material covering the fan on the side of the rotating electrical machine main body (40).

8. The rotating electrical machine according to claim 1, wherein:
the switching semiconductor devices (15) inside the inverter unit (30) generate heat more in a driving mode than in a power generation mode.

9. The rotating electrical machine according to claim 1, wherein:
the case (14) includes a hole (14a) through which the cooling air from the fan of the rotating electrical machine main body (40) passes; and
the case (14) includes an edge (14b) formed in a protruding condition on the periphery of the hole (14a) on the side of the hole opposite the rotating electrical machine main body (40).

10. The rotating electrical machine according to claim 1, wherein:
the switching semiconductor devices (15) of the inverter unit (30) are MOS-FET transistors performing synchronous rectification during the power generation mode of the rotating electrical machine main body (40).

11. A rotating electrical machine according to at least one of the preceding claims, wherein:
a path along which the thermal radiation (23) radiated or irradiated from the rotating electrical machine main body (40) reaches the switching semiconductor devices (15) includes a suppression means provided thereon, the suppression means preventing the thermal radiation from reaching the switching semiconductor devices (15).

## Patentansprüche

1. Elektrische Rotationsmaschine mit
einem Hauptkörper (40) der elektrischen Rotationsmaschine mit einem mechanisch mit einem Motor verbundenen Rotor (4) mit einem Gebläse (12a, 12b) zum Zirkulieren von Kühlungsluft, einem Stator (1), der durch einen Luftspalt getrennt gegenüber dem Rotor angeordnet ist, und
einem Gehäuse (2) zum Arretieren des Stators (1) durch die Aufnahme des Stators, wobei der Hauptkörper (40) der elektrischen Rotationsmaschine Strom am Stator (1) dadurch erzeugt, dass der Rotor (4) durch die Rotationskraft des Motors gedreht wird, wenn der Motor in Betrieb ist, und er die Drehkraft an den Motor durch den Rotor (4) überträgt, der durch die magnetische Wechselwirkung mit dem Stator (1) nach dem Start des Motors gedreht wird, und
eine Invertereinheit (30) mit:
einem Kasten (14), und
einer Mehrzahl von Halbleiterschaltvorrichtungen (15), die in dem Kasten (14) untergebracht sind, wobei die Invertereinheit (30) den Betrieb des Hauptkörpers (40) der elektrischen Drehmaschine und die Ausgangsleistung des Hauptkörpers (40) der elektrischen Drehmaschine steuert, wobei
der Hauptkörper (40) der elektrischen Drehmaschine und die Invertereinheit (30) miteinander durch den Kasten (14) gekoppelt sind, der mit dem Gehäuse (2) verbunden ist, wobei der Hauptkörper (40) der elektrischen Drehmaschine und die Invertereinheit (30) miteinander derart in Verbindung stehen, dass die durch das Drehen des Gebläses zirkulierte Luft die Invertereinheit (30) kühlt und dann in das Gehäuse (2) strömt,
**dadurch gekennzeichnet, dass**
der Kunstharzkasten (14) ferner Unterdrückungsmittel aufweist mit einer thermischen Leitfähigkeit, die kleiner ist als die von Metallen, und zwischen dem Hauptkörper (40) der elektrischen Rotationsmaschine und den Halbleiterschaltvorrichtungen (15) angeordnet ist, wobei das Unterdrückungsmittel verhindert, dass thermische Strahlung, die von dem Hauptkörper (40) der elektrischen Rotationsmaschine abgestrahlt wird, die Halbleiterschaltvorrichtungen (15) erreicht.

2. Elektrische Rotationsmaschine nach Anspruch 1, die ferner aufweist:
einen Radiator (17), der gegenüber dem Unterdrückungsmittel bezogen auf die Halbleiterschaltvorrichtungen (15) angeordnet ist,
wobei der Radiator Wärme von den Halbleiterschaltvorrichtungen (15) abstrahlt.

3. Elektrische Rotationsmaschine nach Anspruch 1, wobei das Unterdrückungsmittel Teil des Kastens (14) ist, das aus einem Kunstharz hergestellt ist, und wobei die Halbleiterschaltvorrichtungen (15) in dem Kunstharzkasten (14) vergossen sind.

4. Elektrische Rotationsmaschine nach Anspruch 1, wobei die Halbleiterschaltvorrichtungen (15) auf einem Substrat angeordnet sind, das am Kasten (14) befestigt ist, und
das Unterdrückungsmittel ein Gel oder ein Kunstharz umfasst, das in einem Spalt zwischen dem Kasten (14) und dem Substrat auf der Seite komprimiert ist, auf der die Halbleiterschaltvorrichtungen (15) angeordnet sind.

5. Elektrische Rotationsmaschine nach Anspruch 1, die ferner aufweist:
ein Reflexionsmittel (25), das auf der Stirnseite des Unterdrückungsmittels und auf der Seite des Hauptkörpers (40) der elektrischen Rotationsmaschine angeordnet ist, wobei das Reflexionsmittel die thermische Strahlung von dem Hauptkörper (40) der elektrischen Rotationsmaschine reflektiert.

6. Elektrische Rotationsmaschine nach Anspruch 1, wobei, wenn die Invertereinheit (30) von der Lage des Hauptkörpers (40) der elektrischen Rotationsmaschine aus betrachtet wird, die Halbleiterschaltvorrichtungen (15) in verdeckten Lagen angeordnet sind.

7. Elektrische Rotationsmaschine nach Anspruch 1, die ferner aufweist:
ein Kunstharzmaterial, welches das Gebläse auf der Seite des Hauptkörpers (40) der elektrischen Drehmaschine abdeckt.

8. Elektrische Rotationsmaschine nach Anspruch 1, wobei die Halbleiterschaltvorrichtungen (15) innerhalb der Invertereinheit (30) mehr Hitze in einem Antriebsmodus als in einem Stromerzeugungsmodus erzeugen.

9. Elektrische Rotationsmaschine nach Anspruch 1, wobei der Kasten (14) ein Loch (14a) aufweist, durch welches die Kühlungsluft vom Gebläse des Hauptkörpers (40) der elektrischen Rotationsmaschine strömt, und wobei
der Kasten (14) eine Kante (14b) aufweist, die auf dem Rand des Loches (14a) auf der Seite des Loches vorstehend angeordnet ist, die dem Hauptkörper (40) der elektrischen Rotationsmaschine gegenüberliegt.

10. Elektrische Rotationsmaschine nach Anspruch 1, wobei die Halbleiterschaltvorrichtungen (15) der Invertereinheit (30) MOSFET-Transistoren sind, die eine synchrone Gleichrichtung während des Stromerzeugungsmodus des Hauptkörpers (40) der elektrischen Rotationsmaschine erzeugen.

11. Elektrische Rotationsmaschine nach mindestens einem der vorstehenden Ansprüche, wobei ein Pfad, entlang dem die thermische Strahlung (23) von dem Hauptkörper (40) der elektrischen Rotationsmaschine strahlt oder abstrahlt, die Halbleiterschaltvorrichtungen (15) erreicht, ein Unterdrückungsmittel umfasst, welches auf ihm angeordnet ist, wobei das Unterdrückungsmittel verhindert, dass die thermische Strahlung die Halbleiterschaltelemente (15) erreicht.

## Revendications

1. Machine électrique rotative comprenant :
un corps principal (40) de machine électrique rotative, le corps principal (40) de machine électrique rotative ayant :
un rotor (4) mécaniquement connecté à un moteur et incluant un ventilateur (12a, 12b) pour faire circuler un air de refroidissement ;
un stator (1) disposé de façon à être opposé au rotor par l'intermédiaire d'un espace d'air ; et
un logement (2) pour fixer le stator (1) en recevant le stator (1), le corps principal (40) de machine électrique rotative générant une puissance au niveau du stator (1) par le rotor (4) étant mis en rotation par la puissance de rotation du moteur lorsque le moteur est en fonctionnement et donnant la puissance de rotation au moteur par le rotor (4) étant mis en rotation du fait d'une action magnétique avec le stator (1) au démarrage du moteur ; et
une unité d'inverseur (30), l'unité d'inverseur ayant :
un boîtier (14) ; et
une pluralité de dispositifs semi-conducteurs de commutation (15) reçus dans le boîtier (14),
l'unité d'inverseur (30) contrôlant le fonctionnement du corps principal (40) de machine électrique rotative et la puissance de sortie du corps principal (40) de machine électrique rotative ; dans laquelle :
le corps principal (40) de machine électrique rotative et l'unité d'inverseur (30) sont couplés l'un avec l'autre par le boîtier (14) étant connecté avec le logement (2) ;
le corps principal (40) de machine électrique rotative et l'unité d'inverseur (30) sont en communication l'un avec l'autre de telle façon que l'air de refroidissement mis en circulation par la rotation du ventilateur refroidit l'unité d'inverseur (30) et passe ensuite dans le logement (2) ;
**caractérisé en ce que**
le boîtier (14) en résine inclut en outre un moyen de suppression ayant une conductivité thermique inférieure à celles de métaux disposés entre le corps principal (40) de machine électrique rotative et les dispositifs semi-conducteurs de commutation (15), le moyen de suppression empêchant qu'un rayonnement thermique rayonné ou irradié du corps principal (40) de machine électrique rotative n'atteigne les dispositifs semi-conducteurs de commutation (15).

2. Machine électrique rotative selon la revendication 1, comprenant en outre :
un moyen de rayonnement (17) disposé à l'opposé du moyen de suppression par rapport aux dispositifs semi-conducteurs de commutation (15), le moyen de rayonnement faisant rayonner une chaleur des dispositifs semi-conducteurs de commutation (15).

3. Machine électrique rotative selon la revendication 1, dans laquelle :
le moyen de suppression fait partie du boîtier (14) constitué d'une résine et les dispositifs semi-conducteurs de commutation (15) sont moulés dans le boîtier (14) en résine.

4. Machine électrique rotative selon la revendication 1, dans laquelle :
les dispositifs semi-conducteurs de commutation (15) sont disposés sur un substrat fixé au boîtier (14) ; et
le moyen de suppression inclut un gel ou une résine garni(e) dans un évidement formé entre le boîtier (14) et le substrat sur le côté duquel les dispositifs semi-conducteurs de commutation (15) sont disposés.

5. Machine électrique rotative selon la revendication 1, comprenant en outre :
un moyen de réflexion (25) disposé sur le côté avant du moyen de suppression et sur le côté du corps principal (40) de machine électrique rotative, le moyen de réflexion réfléchissant le rayonnement thermique du corps principal (40) de machine électrique rotative.

6. Machine électrique rotative selon la revendication 1, dans laquelle :
lorsque l'unité d'inverseur (30) est vue de la position du corps principal (40) de machine électrique rotative, les dispositifs semi-conducteurs de commutation (15) sont disposés en des positions cachées.

7. Machine électrique rotative selon la revendication 1, comprenant en outre :
un matériau de résine recouvrant le ventilateur sur le côté du corps principal (40) de machine électrique rotative.

8. Machine électrique rotative selon la revendication 1, dans laquelle :
les dispositifs semi-conducteurs de commutation (15) à l'intérieur de l'unité d'inverseur (30) génèrent de la chaleur plus dans un mode d'entraînement que dans un mode de génération de puissance.

9. Machine électrique rotative selon la revendication 1, dans laquelle :
le boîtier (14) inclut un trou (14a) à travers lequel l'air de refroidissement provenant du ventilateur du corps principal (40) de machine électrique rotative passe ; et
le boîtier (14) inclut un bord (14b) formé dans un état de saillie sur la périphérie du trou (14a) sur le côté du trou opposé au corps principal (40) de machine électrique rotative.

10. Machine électrique rotative selon la revendication 1, dans laquelle :
les dispositifs semi-conducteurs de commutation (15) de l'unité d'inverseur (30) sont des transistors MOS-FET exécutant un redressement synchrone dans le mode de génération de puissance du corps principal (40) de machine électrique rotative.

11. Machine électrique rotative selon au moins une des revendications précédentes, dans laquelle :
un chemin le long duquel le rayonnement thermique (23) rayonné ou irradié du corps principal (40) de machine électrique rotative atteint les dispositifs semi-conducteurs de commutation (15) inclut un moyen de suppression prévu sur celui-ci, le moyen de suppression empêchant que le rayonnement thermique n'atteigne les dispositifs semi-conducteurs de commutation (15).
